(19) **Europäisches Patentamt**
**European Patent Office**
**Office européen des brevets**

(11) **EP 4 304 924 B1**

(12) **EUROPÄISCHE PATENTSCHRIFT**

(45) Veröffentlichungstag und Bekanntmachung des Hinweises auf die Patenterteilung:
**12.11.2025 Patentblatt 2025/46**

(21) Anmeldenummer: **22751852.9**

(22) Anmeldetag: **21.07.2022**

(51) Internationale Patentklassifikation (IPC):
***B63B 21/27*** (2006.01)     ***B63B 21/29*** (2006.01)

(52) Gemeinsame Patentklassifikation (CPC):
**F03D 13/25; B63B 21/27; B63B 21/29; B63B 21/50;** B63B 2021/004; B63B 2021/203; B63B 2021/265; B63B 2035/446; B63B 2221/22; F05B 2240/93; F05B 2240/95; Y02E 10/72; Y02E 10/727

(86) Internationale Anmeldenummer:
**PCT/IB2022/056744**

(87) Internationale Veröffentlichungsnummer:
**WO 2023/031694 (09.03.2023 Gazette 2023/10)**

---

(54) **MOORINGSYSTEM EINER SCHWIMMENDEN WINDENERGIEANLAGE**

MOORING SYSTEM FOR A FLOATING WIND TURBINE

SYSTÈME D'AMARRAGE POUR ÉOLIENNE FLOTTANTE

---

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2021   DE 102021123006**

(43) Veröffentlichungstag der Anmeldung:
**17.01.2024   Patentblatt 2024/03**

(73) Patentinhaber: **Aerodyn Consulting Singapore Pte Ltd**
**Singapore 048622 (SG)**

(72) Erfinder: **SIEGFRIEDSEN, Sönke**
**24768 Rendsburg (DE)**

(74) Vertreter: **Lobemeier, Martin Landolf**
**c/o lbmr. Patent- und Markenrecht**
**Holtenauer Strasse 57**
**24105 Kiel (DE)**

(56) Entgegenhaltungen:
DE-A1- 102004 056 401     DE-B3- 102013 111 115
DE-B3- 102017 119 635     JP-B2- 6 038 825
US-A1- 2014 193 259

---

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Mooringsystem für die Verankerung einer schwimmenden Windenergieanlage an einem Gewässergrund. Insbesondere betrifft die Erfindung ein System mit einem ein Kardangelenk aufweisenden Gründungselement, wobei das Kardangelenk einen drehfest mit dem Gründungselement verbundenen ersten Achsstummel und einen um die Längsachse des ersten Achsstummels unter Ausführung einer Drehung um dessen eigene Längsachse drehbaren zweiten Achsstummel aufweist, einer schwimmenden Windenergieanlage, und einer Mooringleine, deren eines Ende mittels eines mit dem zweiten Achsstummel drehfest verbundenen ersten Verbindungsmittels mit dem Gründungselement und deren anderes Ende mittels eines an der schwimmenden Windenergieanlage drehbar gelagerten zweiten Verbindungsmittels mit der schwimmenden Windenergieanlage verbunden ist.

Ein derartiges System ist insbesondere aus der DE 10 2004 056 401 A bekannt. Diese offenbart eine als Lee-Läufer ausgebildete, sich selbst ausrichtende schwimmende Windenergieanlage, die am Gewässergrund mittels nur einer einzigen Mooringleine an einem einzigen Ankerpunkt befestigt ist. Die Mooringleine ist mit dem Gründungselement mittels eines ersten Kardangelenks und mit der Single-Point-Mooring-Windenergieanlage mittels eines zweiten Kardangelenks verbunden, wobei das obere Ende der Mooringleine an der Windenergieanlage auch drehbar gelagert sein soll.

Weiter ist aus der DE 10 2013 111 115 B3 eine Single-Point-Mooring-Windenergieanlage bekannt, bei der die Kupplung zwischen der Mooringleine und der schwimmenden Windenergieanlage eine Schleifkupplung und eine Wirbelkupplung aufweist, die gesondert oder auch gemeinsam kardanisch aufgehängt sein können. Die Dokumente US 2014/193259 A1, JP 6 038825 B2 und DE 10 2017 119635 B3 stellen weitere relevante Dokumente des Standes der Technik dar.

Die bekannten Windenergieanlagen weisen einen teilweise recht aufwändigen und nur schwer zu realisierenden Aufbau auf, sodass es Aufgabe der vorliegenden Erfindung ist, das System, das ein Gründungselement, eine schwimmende Windenergieanlage und eine das Gründungselement mit der schwimmenden Windenergieanlage verbindende Mooringleine aufweist, so weiter zu entwickeln, das dieses möglichst einfach aufgebaut ist sowie effizient installiert und gewartet werden kann.

Diese Aufgabe wird erfindungsgemäß durch das System mit den Merkmalen von Anspruch 1 gelöst. Die Unteransprüche geben vorteilhafte Ausgestaltungen der Erfindung wieder.

Der Grundgedanke der Erfindung besteht darin, eine schwimmende Windenergieanlage an nur einem einzigen Befestigungspunkt bzw. Gründungselement mittels einer Mooringleine am Gewässergrund zu verankern, um das sich die schwimmende Windenergieanlage in Abhängigkeit von der Windrichtung ausrichten kann wie ein vor Anker liegendes Schiff. Das bedeutet, dass nur eine einzige Verbindung zwischen einem Gründungselement am Gewässergrund und der schwimmenden Windenergieanlage besteht. Das Gründungselement am Gewässergrund muss hierfür nicht nur zur Aufnahme horizontaler Kräfte, sondern auch zur Aufnahme von Vertikallasten eingerichtet sein. Am besten sind hierfür Pfahlgründungen oder bei größeren Wassertiefen auch Suction-Bucket-Fundamente geeignet. Die Art der Verbindung des Gründungselements mit dem Gewässergrund kann aus Sicherheitsgründen aber auch redundant ausgelegt sein.

Damit sich die Mooringleine bei der sich zwangläufig einstellenden Drehung der gesamten schwimmenden Windenergieanlage um das Gründungselement am Gewässergrund nicht um sich selbst aufwickelt, ist eine geeignete Vorrichtung vorhanden, die dieser Verdrehung aktiv entgegenwirkt. Dieses wird erfindungsgemäß dadurch erreicht, dass am Gründungselement eine kardanische, aber drehstarre Aufhängung angeordnet ist, die die Mooringleine vom Gründungselement immer in Richtung der schwimmenden Windenergieanlage ausrichtet, ohne dabei um sich selbst aufgewickelt zu werden. Um bei einem Drehen der schwimmenden Windenergieanlage um das Gründungselement ein Verdrehen der Mooringleine zu verhindern, wird die Mooringleine gleichzeitig um deren eigene Längsachse an der schwimmenden Windenergieanlage entsprechend mitgedreht.

Die kardanische Aufhängung wird durch ein konventionelles Kardangelenk mit sich schneidenden Gelenkdrehachsen oder ein exzentrisches Kardangelenk realisiert. Ein konventionelles Kardangelenk erlaubt Beugewinkel von maximal 35-45°, wohingegen exzentrische Kardangelenke einen Beugewinkel von bis zu 90° ermöglichen.

An der schwimmenden Windenergieanlage befindet sich bevorzugt ein Drehantrieb, der ein Drucklager aufweisendes Drehwerk drehen kann, an dem das die Mooringleine mit der Windenergieanlage verbindende Verbindungsmittel angeschlagen ist. Der Drehantrieb wird dabei über eine Sensorik gesteuert, die die aktuelle Position und bevorzugt auch Ausrichtung der schwimmenden Windenergieanlage in Bezug auf das Gründungselement ermittelt.

Die Verbindung zwischen dem Gründungselement am Gewässergrund und der schwimmenden Windenergieanlage kann aus Redundanzgründen vorzugsweise aus zwei unabhängigen, parallelen Mooringleinen bestehen. Die Mooringleinen sind vorzugweise Synthetikleinen, die besonders bevorzugt ein spezifisches Gewicht von ca. 1.000 kg/m$^3$ und grundsätzlich eine gewisse Elastizität aufweisen, um die dynamischen Kräfte auf die schwimmende Windenergieanlage bei Wind- und Wellenlasten möglichst abzudämpfen. Höchst bevorzugt sind zwei Mooringleinen parallel und doppelt geführt, sodass die Last auf vier Seile im Wesentlichen gleichmäßig verteilt ist. Die Mooringleinen sind bevorzugt zweiteilig ausgebildet, wobei die Enden dieser Mooringleinen höchst bevorzugt an einem als Boje ausgebildeten Konnektor, der sich nahe an der schwimmenden Windenergieanlage befindet, befestigt sind. Dabei werden die Abschnitte der Mooringleinen jeweils am Gründungselement am Gewässergrund über einen Block oder eine Umlenkrolle gelegt und wieder nach oben zum Konnektor geführt. Die Verbindung wird mit zwei Mooringleinen parallel ausgeführt, um eine Redundanz bei Ausfall einer Mooringleine zu haben. Durch diese Ausführung ist es möglich, eine Mooringleine auszutauschen, ohne Arbeiten am Gewässergrund mit Tauchern oder U-Booten ausführen zu müssen.

Die Länge des Abschnitts der Mooringleine zwischen dem Gründungselement und dem Konnektor ist dabei sinnvoller Weise so zu wählen, dass der von der Windenergieanlage abgekoppelte Konnektor auftauchen kann und an der Gewässeroberfläche schwimmt und besonders bevorzugt auch noch einige Meter aus dem Wasser gehoben werden kann, um Wartungsarbeiten, z.B. den Austausch einer Mooringleine, auf einem Schiff vornehmen zu können. Andererseits soll die Verbindung auch nicht zu lang sein, um ein Aufliegen der Mooringleinen auf dem Gewässergrund zu vermeiden.

Wird die Mooringleine in zwei Abschnitten ausgeführt und sind die beiden Abschnitte mittels eines Konnektors miteinander verbunden, sind auf der dem Gründungselement zugewandten Unterseite des Konnektors und auf der dem Gründungselement abgewandten Oberseite des Konnektors weitere Verbindungsmittel zur Verbindung der Abschnitte der Mooringleinen mit dem Konnektor vorgesehen. Diese weiteren Verbindungsmittel sind bevorzugt jeweils redundant, besonders bevorzugt doppelt vorgesehen. Die Länge des Abschnitts zwischen dem Konnektor und der Windenergieanlage ist jedoch kürzer als die Länge des Abschnitts zwischen dem Gründungselement und dem Konnektor ausgelegt. Beide Abschnitte der Mooringleine können aus Synthetikseilen oder aus Stahlseilen bestehen. In jedem Fall sind die Mooringleinenabschnitte mit dem Konnektor lösbar verbunden.

Grundsätzlich ist vorgesehen, dass parallel zu den Mooringleinen, bevorzugt zwischen diesen, auch ein die Windenergieanlage mit dem elektrischen Netz verbindendes Stromkabel geführt ist. Am Konnektor kann die elektrische Verbindung gelöst werden, um die schwimmende Windenergieanlage vom Mooringsystem zu lösen, beispielsweise um die schwimmende Windenergieanlage zur Reparatur oder Wartung in einen Hafen zu schleppen. Der als Boje ausgestaltete Konnektor schwimmt in diesem Zustand an der Wasseroberfläche, sodass ein Wiederverbinden mit der schwimmenden Windenergieanlage nach Abschluss der Reparatur einfach oberhalb der Wasseroberfläche vorgenommen werden kann. Das Stromkabel wird bevorzugt an dem am Gewässergrund angeordneten Gründungselement mittig durch das Kardangelenk hindurch und durch das Gründungselement herausgeführt und mit dem abführenden Seekabel verbunden. Das Stromkabel von der schwimmenden Windenergieanlage bis zum Gründungselement muss dabei eine gewisse Materialelastizität oder geometrische Nachgiebigkeit haben, um den Bewegungen der Mooringleine(n) folgen zu können und keine unzulässig großen mechanischen Eigenspannungen aufzubauen. Auf der Seite der schwimmenden Windenergieanlage wird das Stromkabel zentrisch durch des Drucklager durchgeführt. Wenn also bei einer Veränderung der Ausrichtung der schwimmenden Windenergieanlage auf Grund einer Windrichtungsänderung auch der Drehantrieb zum Ausgleich der Verbindungsverdrehung nachdreht, dann verwindet sich das Stromkabel auf der der Mooringleine gegenüberliegenden Seite des Drucklagers innerhalb der Windenergieanlage. Zum Entwinden des Stromkabels beim Erreichen eines noch zulässigen Grenzwertes der Verwindung wird dann die schwimmende Windenergieanlage mit Hilfe der Mittelspannungsschaltanlage vom Netz getrennt und ein verdrehtes Stromkabel insbesondere mittels der aus der DE 10 2017 119 635 B3 bekannten elektrischen Kupplung entdreht.

Der Drehantrieb zum Ausgleich einer möglichen Verwindung der Mooringleine (und des Stromkabels) zwischen dem Gründungselement und der schwimmenden Windenergieanlage wird beispielsweise durch einen Kompass gesteuert, der die Ausrichtung der schwimmenden Windenergieanlage gegenüber dem Gründungselement am Gewässergrund bestimmt. Da ein Kardangelenk kein homokinetisches Gelenk darstellt, ist der Zusammenhang zwischen Drehwinkel der geschwenkten Achse des Gelenks und dem Drehwinkel um die senkrechte Achse der anderen Seite des Gelenkes nicht linear, sondern unterliegt einer Winkelfunktion, die vom Beugewinkel des Kardangelenkes abhängig ist. Wird ein einfaches Gelenk um den Beugungswinkel $\beta$ abgewinkelt und in diesem Zustand verdreht, so weicht der Winkel $\varphi_2$, (also der Drehwinkel des zweiten Achsstummels) des zur Verbindung mit dem Verbindungsmittel eingerichteten Achsstummels vom Winkel $\varphi_1$ (also der Drehposition des zweiten Achsstummels) des mit dem Gründungselement drehfest verbundenen Achsstummels ab. Zwischen den Winkeln besteht die Beziehung:

$$\varphi 2 = \arctan\left(\frac{\tan \varphi 1}{\cos \beta}\right)$$

Zusätzlich ist für die seltene Situation, dass kein Wind, keine Strömung oder keine Welle herrscht, bevorzugt sicherzustellen, dass der Abstand zwischen dem Gründungselement und der schwimmenden Windenergieanlage ein Minimum nicht unterschreitet, um ein Aufliegen der Mooringleine auf dem Gewässergrund oder ein Verwinden einer losen Mooringleine zu vermeiden. Dieses wird bevorzugt dadurch bewerkstelligt, dass die aktuelle Position der schwimmenden Windenergieanlage relativ zur Position des Gründungselements erfasst wird, beispielsweise mittels eines satellitengestützten Positionsbestimmungssystems, und bei Unterschreiten einer vorgegebenen Mindestdistanz, also dem Vorliegen einer Lose, ein Antrieb, insbesondere ein Schiffsantrieb angesteuert wird, der die Windenergieanlage von der Position des Gründungselements fort antreibt und die Mooringleine leicht gestrafft hält. Der Antrieb, der bevorzugt elektrisch angetrieben ist, kann als Schiffsschraube oder nach Art einer Querstrahlsteueranlage ausgebildet sein. Alternativ zur Verwendung eines satellitengestützten Positionsbestimmungssystems kann auch die Zugspannung des Verbindungsmittels erfasst und ein entsprechender Vortrieb bei Unterschreiten einer vorbestimmten Zugspannung veranlasst werden.

Erfindungsgemäß wird also ein System vorgeschlagen mit einem ein Kardangelenk aufweisenden Gründungselement, wobei das Kardangelenk einen drehfest mit dem Gründungselement verbundenen ersten Achsstummel und einen um die Längsachse des ersten Achsstummels unter Ausführung einer Drehung um dessen eigene Längsachse drehbaren zweiten Achsstummel aufweist, einer schwimmenden Windenergieanlage, und einer Mooringleine, deren eines Ende mittels eines mit dem zweiten Achsstummel drehfest verbundenen ersten Verbindungsmittels mit dem Gründungselement und deren anderes Ende mittels eines an der schwimmenden Windenergieanlage drehbar gelagerten zweiten Verbindungsmittels mit der schwimmenden Windenergieanlage verbunden ist, wobei eine in Abhängigkeit von der Drehposition der schwimmenden Windenergieanlage um das Gründungselement die Einnahme einer Drehposition des an der schwimmenden Windenergieanlage drehbar gelagerten zweiten Verbindungsmittels bewirkende Steuerung vorgesehen ist, wobei die Drehposition des an der schwimmenden Windenergieanlage drehbar gelagerten zweiten Verbindungsmittels der der Drehposition der schwimmenden Windenergieanlage um das Gründungselement geometrisch entsprechenden Drehposition des zweiten Achsstummels um dessen eigene Längsachse entspricht. Mit anderen Worten werden der zweite Achsstummel und das zweite Verbindungmittel in ihrer Drehposition stets identisch zueinander ausgerichtet, sodass sich die Mooringleine nicht verwinden kann.

Bevorzugt ist die Steuerung unter Berücksichtigung der Ausrichtung der Längsachse der schwimmenden Windenergieanlage relativ zum Gründungselement die Einnahme der Drehposition des an der schwimmenden Windenergieanlage drehbar gelagerten zweiten Verbindungsmittels bewirkend eingerichtet. Hierfür weist die Steuerung besonders bevorzugt einen Kompass zur Bestimmung der Ausrichtung der Längsachse der schwimmenden Windenergieanlage relativ zum Gründungselement auf.

Die Steuerung weist weiter bevorzugt einen Sensor zur Positionsbestimmung mittels eines globalen Satellitennavigationssystems auf.

Die Steuerung umfasst bevorzugt einen Drehantrieb zum Drehen des drehbar gelagerten zweiten Verbindungsmittels. Der Drehantrieb ist insbesondere elektrisch angetrieben und ist zur unbegrenzten Drehung des zweiten Verbindungsmittels in beide Drehrichtungen eingerichtet. Insbesondere weist der Drehantrieb einen Sensor zum Erfassen der Drehposition des zweiten Verbindungsmittels relativ zur Windenergieanlage auf, sodass die Steuerung bei Vorgabe einer Soll-Drehposition den Drehantrieb bei Erreichen dieser durch den Sensor erfassten Drehposition abschalten kann.

Weiter ist bevorzugt vorgesehen, dass die schwimmende Windenergieanlage eine elektrische Kupplung zur Anbindung an ein mit einem außerhalb der Windenergieanlage angeordneten elektrischen Netz verbundenen Stromkabel aufweist, die einen mit dem Stromkabel verbundenen ersten elektrischen Steckverbinder und einen komplementär zum ersten elektrischen Steckverbinder ausgebildeten, mit einem innerhalb der Windenergieanlage angeordneten elektrischen Netz verbundenen zweiten elektrischen Steckverbinder aufweist, wobei die Steckverbinder zum Ausbilden und Trennen einer elektrischen Steckverbindung relativ zueinander verfahrbar und zum Entwinden des mit dem ersten Steckverbinder verbundenen Stromkabels zueinander drehbar eingerichtet sind. Diese elektrische Kupplung weist insbesondere die Merkmale der aus der DE 10 2017 119 635 B3 bekannten elektrischen Kupplung auf, die durch Bezugnahme in dieser Anmeldung enthalten sind.

Nach einer weiteren bevorzugten Ausgestaltung ist vorgesehen, dass die Steuerung einen die schwimmende Windenergieanlage auf einen vorbestimmten Abstand zum Gründungselement haltenden Antrieb, insbesondere einen Schiffsantrieb aufweist.

Das Gründungselement ist bevorzugt eine Pfahlgründung, ein Suction-Bucket-Fundament oder eine Schwergewichtsgründung, wobei das mit dem Gründungselement verbundene Kardangelenk ein konventionelles Kardangelenk mit sich schneidenden Gelenkdrehachsen oder ein exzentrisches Kardangelenk sein kann.

Jedenfalls ist bevorzugt vorgesehen, dass das Kardangelenk von einem das Kardangelenk schützenden Faltenbalg eingehaust ist, der den Bewegungen des Kardangelenks folgend und speziell aus rostfreiem Edelstahl gefertigt ist. Dieser Faltenbalg ist bevorzugt zur Schmierung des Kardangelenks und zum Schutz vor Korrosion bzw. zum Schutz vor dem Meerwasser und Bewuchs mit Fett gefüllt und weist höchst bevorzugt eine die Achsstummel des Kardangelenks in eine gestreckte Anordnung zwingende Rückstellkraft auf. Ein konventionelles Kardangelenk wird insbesondere dann verwendet, wenn am Ort der Installation der schwimmenden Windenergieanlage ein Beugewinkel von ca. 35° bis 45° ausreichend ist. Sollte aufgrund der örtlichen Gegebenheiten ein größerer Beugewinkel erforderlich sein, wird bevorzugt ein exzentrisches Kardangelenk zur Anwendung kommen, das einen Beugewinkel bis zu 90° ermöglicht.

Weiter ist bevorzugt vorgesehen, dass das Gründungselement einen zur Verbindung mit einem Stromkabel eingerichteten Anschluss aufweist. Diese Ausgestaltung ermöglicht einen einfachen vorgefertigten Aufbau, der die weiteren Arbeiten zum Anschluss der schwimmenden Windenergieanlage an das elektrische Netz vereinfacht.

Der Anschluss ist speziell als Steckverbinder ausgebildet, der mit einem Stromkabel verbunden werden kann bzw. verbunden ist, das mit einem außerhalb der Windenergieanlage angeordneten elektrischen Netz in elektrischer Verbindung steht. Alternativ kann der Anschluss als eine ein mit einem außerhalb der Windenergieanlage angeordneten elektrischen Netz verbundenes Kabel aufnehmende Durchführung vorgesehen sein, durch die ein die schwimmende Windenergieanlage mit dem elektrischen Netz verbindende Stromleitung durchgeführt und gegebenenfalls gesichert wird.

In jedem Fall aber weist das Kardangelenk eine ein mit einem außerhalb der Windenergieanlage angeordneten elektrischen Netz verbundenes Stromkabel aufnehmende Durchführung auf. Dabei ist die Durchführung in den das Kardangelenk bildenden Achsstummeln und dem die Achsstummel miteinander verbindenden Zwischenstück zentrisch angeordnet. So ist stets sichergestellt, dass der Beugewinkel und die Ausrichtung des Kardangelenks mit dem Beugewinkel und der Ausrichtung des Stromkabels identisch ist.

Das erste Verbindungsmittel und/oder das zweite Verbindungsmittel ist bevorzugt eine Rolle, um die die Mooringleine geführt ist. Besonders bevorzugt ist jeweils ein weiteres parallel zum ersten Verbindungsmittel und zum zweiten Verbindungsmittel angeordnetes, als Rolle ausgebildetes weiteres Verbindungsmittel vorgesehen, um das eine weitere Mooringleine geführt ist. Die redundante Auslegung der besonders bevorzugt ausgestalteten Verbindung des Gründungselements mit der schwimmenden Windenergieanlage führt also im Fall des Bruchs einer Mooringleine dazu, dass die Anlage weiter sicher gehalten wird. Insgesamt verteilt sich die Zuglast bei zwei um jeweils eine Rolle geführten Mooringleinen also im Wesentlichen funktional gleichmäßig auf vier Seile, sodass der Durchmesser der Mooringleinen relativ klein gewählt werden kann und so gewichtssparend ist. Die Verwendung einer Umlenkrolle am Gründungselement hat den Vorteil, dass bei einem eventuell notwendigen, beispielsweise aufgrund eines Verschleißes einer Mooringleine oder durch einen Zertifizierer in vorbestimmten Zeitintervallen vorgeschriebenen Tausch einer Mooringleine an der Gewässeroberfläche ohne den Einsatz von Tauchern oder U-Booten gearbeitet werden kann. Dazu wird das obere Ende einer Mooringleine mit einer neuen Mooringleine verbunden und die gesamte Mooringleine einmal komplett durchgezogen, sodass die alte Mooringleine entfernt und die neue Mooringleine eingebaut ist.

Die Mooringleine ist speziell zweiteilig ausgebildet, wobei die zwei Abschnitte der Mooringleine mittels eines Konnektors miteinander verbunden sind. Der Konnektor wiederum ist bevorzugt als schwimmfähige Boje ausgebildet. Dieser weist höchst bevorzugt auf einer seiner Oberflächen einen ersten Anschluss für ein den Konnektor mit einem außerhalb der Windenergieanlage angeordneten elektrischen Netz verbindendes erstes Stromkabel und auf einer dieser Oberfläche gegenüberliegenden Oberfläche einen zweiten Anschluss für ein den Konnektor mit der schwimmenden Windenergieanlage verbindendes zweites Stromkabel auf. Diese Ausgestaltung ermöglicht, die Verbindung zwischen den Abschnitten der Mooringleine und damit die Verbindung der Windenergieanlage mit dem Gründungselement auf der Gewässeroberfläche durchzuführen.

Dabei entspricht die Länge des das Gründungselement mit dem Konnektor verbindenden Abschnitts wenigstens der Gewässertiefe im Bereich des Gründungselements.

Schließlich ist die Mooringleine bevorzugt ein Seil, insbesondere ein Synthetikseil oder ein Stahlseil.

Die Erfindung wird im Folgenden anhand von in den beigefügten Zeichnungen dargestellten, besonders bevorzugt ausgestalteten Ausführungsbeispielen näher erläutert. Es zeigen:

Fig. 1 eine Übersicht eines besonders bevorzugt ausgestalteten Systems nach der Erfindung mit einer besonders bevorzugt ausgestalteten, an einem Gewässergrund mittels eines Gründungselements verankerten schwimmenden Windenergieanlage (A), eine Detailansicht eines besonders bevorzugt ausgestalteten, die an der Gründung befestigten Mooringleinen mit der Windenergieanlage verbindenden Konnektors (B) und eine Detailansicht des im Gewässergrund verankerten Gründungselements (C);

Fig. 2 eine perspektivische Ansicht eines besonders bevorzugt ausgestalteten Gründungselements mit einem konventionellen Kardangelenk mit sich schneidenden Gelenkdrehachsen (A) und mit einem exzentrischen Kardangelenk (B);

Fig. 3 die Anbindung der mit dem Gründungselement verbundenen Mooringleine an der schwimmenden Windenergieanlage in einer perspektivischen Ansicht (A) und in einer geschnittenen Ansicht (B);

Fig. 4 eine besonders bevorzugt ausgestaltete schwimmende Windenergieanlage vor deren Verankerung am Gewässergrund in einer Übersicht (A) und in einer Detailansicht im Bereich der Gewässeroberfläche (B);

Fig. 5     den in Fig. 4B dargestellten, das Gründungselement mit der schwimmenden Windenergieanlage verbindenden Konnektor in einer perspektivischen Ansicht von oben (A) und von unten (B);

Fig. 6     eine geschnittene Ansicht des Konnektors im entkuppelten Zustand (A) und im gekoppelten Zustand (B);

Fig. 7     eine Seitenansicht der am Gewässergrund verankerten schwimmenden Windenergieanlage in zwei durch unterschiedliche Windrichtungen bewirkten Positionen; und

Fig. 8     eine Draufsicht auf die schwimmende Windenergieanlage in vier durch unterschiedliche Windrichtungen bewirkten Positionen.

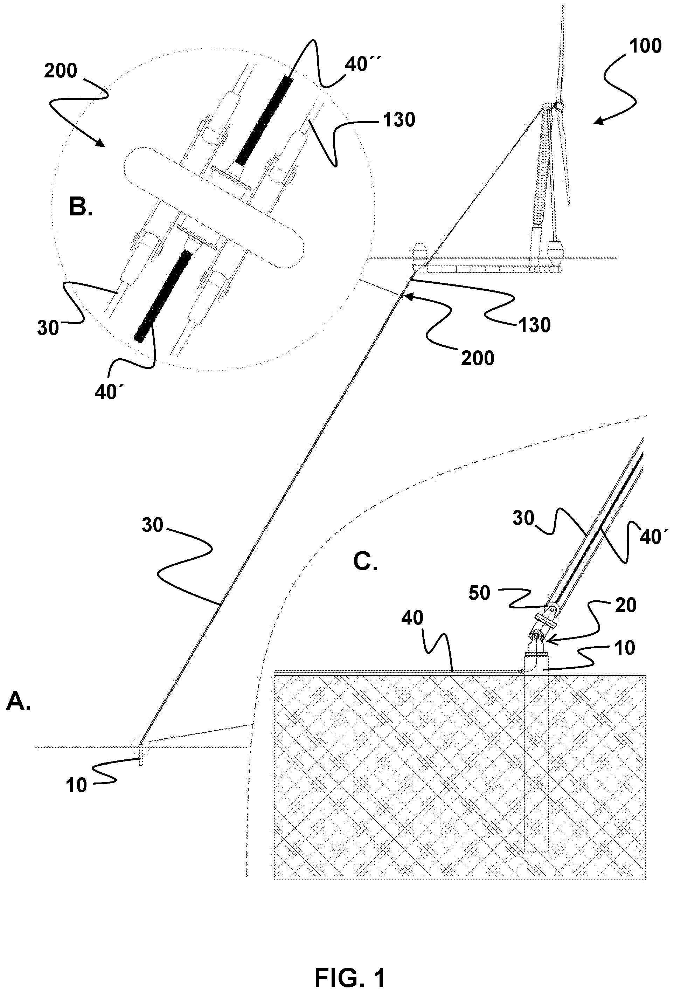

Fig. 1 zeigt eine Übersicht eines besonders bevorzugt ausgestalteten Systems nach der Erfindung mit einer besonders bevorzugt ausgestalteten, an einem Gewässergrund mittels eines Gründungselements verankerten schwimmenden Windenergieanlage (A), eine Detailansicht eines besonders bevorzugt ausgestalteten, die an der Gründung befestigten Mooringleinen mit der Windenergieanlage verbindenden Konnektors (B) und eine Detailansicht des im Gewässergrund verankerten Gründungselements (C). Insbesondere zeigt Fig. 1A eine an einem Gewässergrund mittels des Gründungselements 10 verankerte schwimmende Windenergieanlage 100, die im Betrieb in den Wind ausgerichtet ist und die mit dem Gründungselement 10 verbindende Mooringleine 30 spannt. Fig. 4C zeigt hierzu eine Detailansicht des im Gewässergrund verankerten Gründungselements 10. Der von der Mooringleine 30 im Verhältnis zum Gewässergrund eingenommene Winkel entspricht bei Betrieb der schwimmenden Windenergieanlage 100 im Wesentlichen dem zwischen der zwischen der Anbindung der Mooringleine 30 an der Windenergieanlage 100 und dem Turm der schwimmenden Windenergieanlage 100 geführten Abspannung und dem Fundament der schwimmenden Windenergieanlage 100 eingenommenen Winkel.

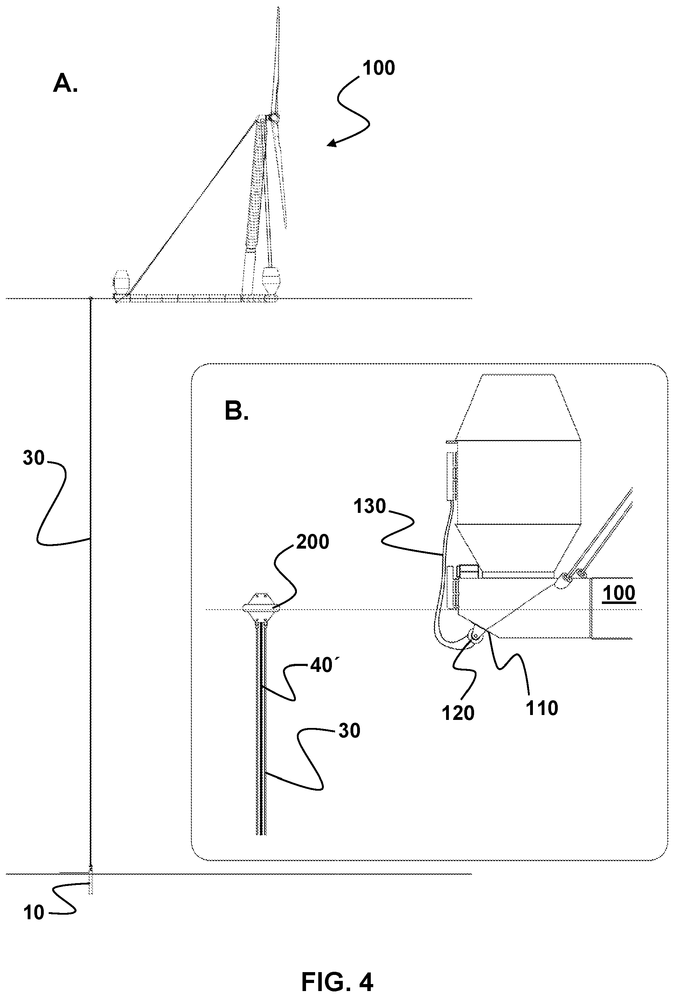

Als Besonderheit dieses Ausführungsbeispiels ist der mit dem Gründungselement 10 verbundene erste Abschnitt der Mooringleine 30 nicht unmittelbar mit der Windenergieanlage 100, sondern mit einem als Boje ausgebildeten Konnektor 200 verbunden. Wie Fig. 4B in einer Detailansicht zeigt, erfolgt die Verbindung des ersten Abschnitts der Mooringleine 30 mit der schwimmenden Windenergieanlage 100 mittelbar über den Konnektor 200, der mit dem mit der schwimmenden Windenergieanlage 100 verbundenen zweiten Abschnitt der Mooringleine 130 verbunden ist. Dabei ist ebenfalls vorgesehen, dass das zum Gründungselement 10 führende Stromkabel 40' mit dem Konnektor 200 mittels einer Steckverbindung verbunden ist, wobei ein weiteres Stromkabel 40" den Konnektor 200 mit der schwimmenden Windenergieanlage 100 elektrisch verbindet. Die Funktionen und Aufgaben der einzelnen Elemente werden im Folgenden detailliert beschrieben.

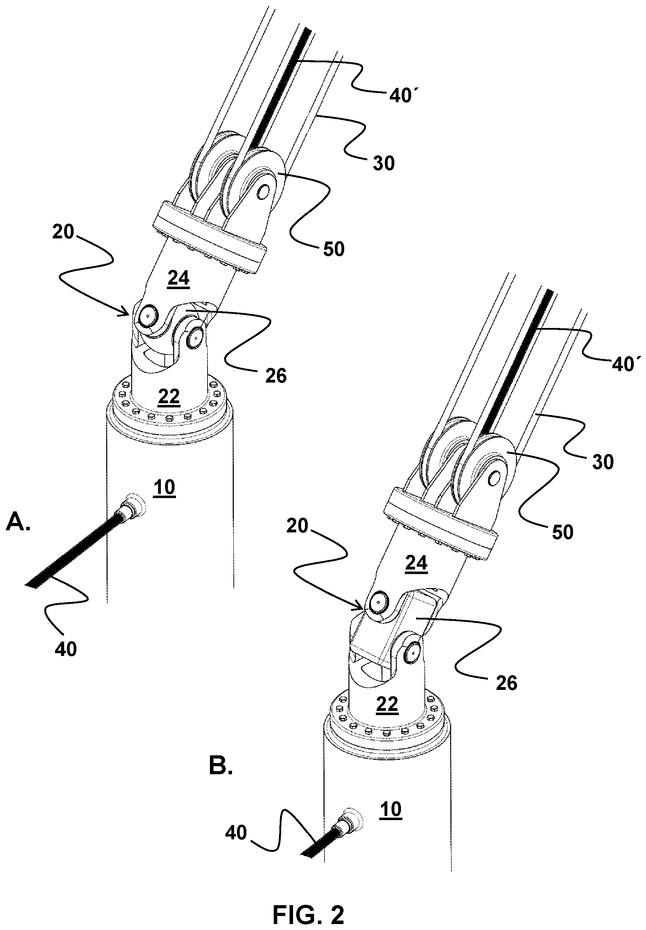

Fig. 2 zeigt eine perspektivische Ansicht eines ersten Ausführungsbeispiels des Gründungselements 10 mit einem konventionellen Kardangelenk mit sich schneidenden Gelenkdrehachsen (A) und ein zweites Ausführungsbeispiel des Gründungselements mit einem exzentrischen Kardangelenk (B). Insbesondere zeigt Fig. 1A ein als Pfahlgründung ausgebildetes Gründungselement 10 für die Verankerung einer schwimmenden Windenergieanlage 100 an einem Gewässergrund. Das Gründungselement 10 weist an dessen Oberseite ein konventionelles Kardangelenk 20 auf, das aus zwei Achsstummeln 22, 24 gebildet ist, die mittels eines kugelförmigen Zwischenstücks 26 miteinander verbunden sind. Dabei ist der eine Achsstummel 22 biegesteif ausgebildet und drehfest mit dem Gründungselement 10 verbunden und der andere Achsstummel 24 zur Verbindung mit einer das Gründungselement 10 mit der schwimmenden Windenergieanlage verbindenden Mooringleine 30 eingerichtet.

Insbesondere weist der andere Achsstummel 24 als erstes Verbindungsmittel 50 zwei parallel zueinander ausgebildete Rollen 50 auf, die jeweils eine um die als Umlenkrollen wirkenden Rollen 50 geführte Mooringleine 30 in Form eines Seils aufnehmen. Zwischen den Rollen 50 bzw. Seilen 30 ist eine Durchführung vorgesehen, die ein Stromkabel 40' aufnimmt. Das Stromkabel 40' ist mit der schwimmenden Windenergieanlage verbunden und bindet diese in ein elektrisches Netz ein. Hierfür weist das Gründungselement 10 speziell einen zur Verbindung mit einem Stromkabel 40 eingerichteten Anschluss auf, der eine elektrische Verbindung zwischen dem vom Gründungselement 10 wegführenden Stromkabel 40, das insbesondere als Seekabel ausgebildet ist, und dem von der Windenergieanlage zum Gründungselement 10 hinführenden Stromkabel 40' schafft.

Das in Fig. 2A dargestellte konventionelle Kardangelenk 20 weist einen maximalen Beugewinkel von ca. 35-45° auf, wohingegen das in Fig. 2B dargestellte exzentrische Kardangelenk 20 mit einem quaderförmigen Zwischenstück 26 einen maximalen Beugewinkel von bis zu 90° aufweist.

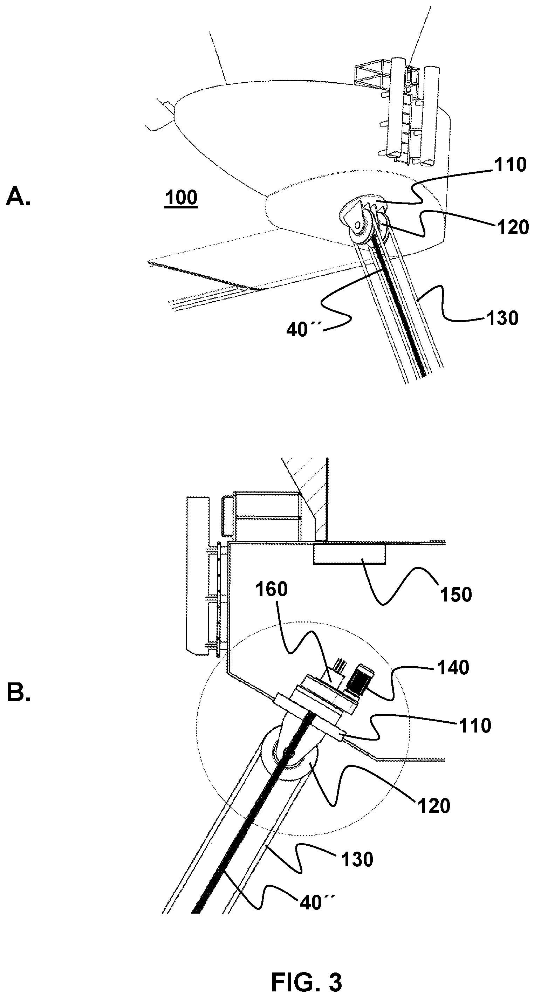

Fig. 3 zeigt die Anbindung der mit dem Gründungselement verbundenen Mooringleine 30 an der schwimmenden Windenergieanlage 100 in einer perspektivischen Ansicht (A) und in einer geschnittenen Ansicht (B). Die Anbindung der Mooringleine 30 an der Unterseite der schwimmenden Windenergieanlage 100 ist insbesondere als Gegenstück zum Gründungselement 10 ausgebildet. Insbesondere ist hier ein als zwei Rollen 120 ausgebildetes Verbindungsmittel 120 vorgesehen, das zwei Mooringleinen 30 mit der Windenergieanlage 100 verbindet, wobei das zweite Verbindungsmittel 120 mittels des Drehwerks 110 relativ zur Windenergieanlage 100 drehbar gelagert ist. Die Umlenkrollen 120 sind insbesondere über einen Tragrahmen mit dem Drehwerk 110 fest verbunden, sodass die Lasten der schwimmenden Windenergieanlage 100 aus Wind und Welle auf das Mooringsystem und darüber in das Gründungselement 10 am Gewässergrund übertragen werden.

Das Drehwerk 110 weist eine zwischen den Rollen 120 angeordnete Durchführung für das Stromkabel 40' auf, wobei ein eine Drehung des Drehwerks 110 bewirkender Drehantrieb 140 vorgesehen ist. Der Drehantrieb 140 wird von einer Steuerung angesteuert, die mit einer Einrichtung zur Erfassung der Drehposition der schwimmenden Windenergieanlage 100 in Relation zum Gründungselement 10 eingerichtet ist. Das zweite Verbindungsmittel 120 kann dabei kontrolliert über den Drehantrieb 140 gezielt verdreht werden, um ein Aufdrehen der Verbindungselemente 30 und des Stromkabels 40' bei einer Veränderung der horizontalen Ausrichtung der schwimmenden Windenergieanlage 100 zu vermeiden. Zur Bestimmung des erforderlichen Verdrehwinkels, den der Drehantrieb 140 das zweite Verbindungsmittel 120 verdrehen muss, damit das bis zum Gründungselement 20 führende Verbindungsmittel 30 gerade, d.h. ohne Verdrehung ausgerichtet ist, ist ein Richtungssensor 150 an der schwimmenden Windenergieanlage angebracht, um die Drehposition der schwimmenden Windenergieanlage 100 um das Gründungselement 10 zu bestimmen. Dabei ist zu berücksichtigen, dass das Kardangelenk 20 eine ungleichmäßige Drehübertragung ausführt, wenn dieses gebeugt wird.

Fig. 4 zeigt die in Fig. 1 dargestellte schwimmende Windenergieanlage 100 vor deren Verankerung am Gewässergrund in einer Übersicht (A) und in einer Detailansicht im Bereich der Gewässeroberfläche (B). Insbesondere zeigt Fig. 4A einen an dem Gründungselement 10 befestigten ersten Abschnitt einer Mooringleine 30, deren freies (oberes) Ende an einem als Boje ausgebildeten Konnektor 200 befestigt ist. Dabei weist der erste Abschnitt der Mooringleine 30 eine Länge auf, die mindestens der Gewässertiefe im Bereich des im Gewässergrund eingebrachten Gründungselements 10 entspricht. Jedenfalls weist der schwimmfähige Konnektor 200 auf seiner Unterseite Befestigungsmittel zur Befestigung des ersten Abschnitts der Mooringleine 30 und des Stromkabels 40' auf. Dabei zeigt Fig. 4B eine Detailansicht von Fig. 4A, in der zu erkennen ist, dass der Konnektor 200 im gezeigten Beispiel auf der Wasseroberfläche aufschwimmt und der zweite (obere) Abschnitt der Mooringleine 130 an der Windenergieanlage 100 temporär befestigt ist. Die schwimmende Windenergieanlage 100 weist das zweite Verbindungsmittel 120 auf, an dem der zweite Abschnitt der Mooringleine 130 vorbefestigt ist und mitgeführt wird, sodass die Windenergieanlage 100 an der Wasseroberfläche mit dem Konnektor 200 und damit mittelbar mit dem Gründungselement 10 verbunden werden kann.

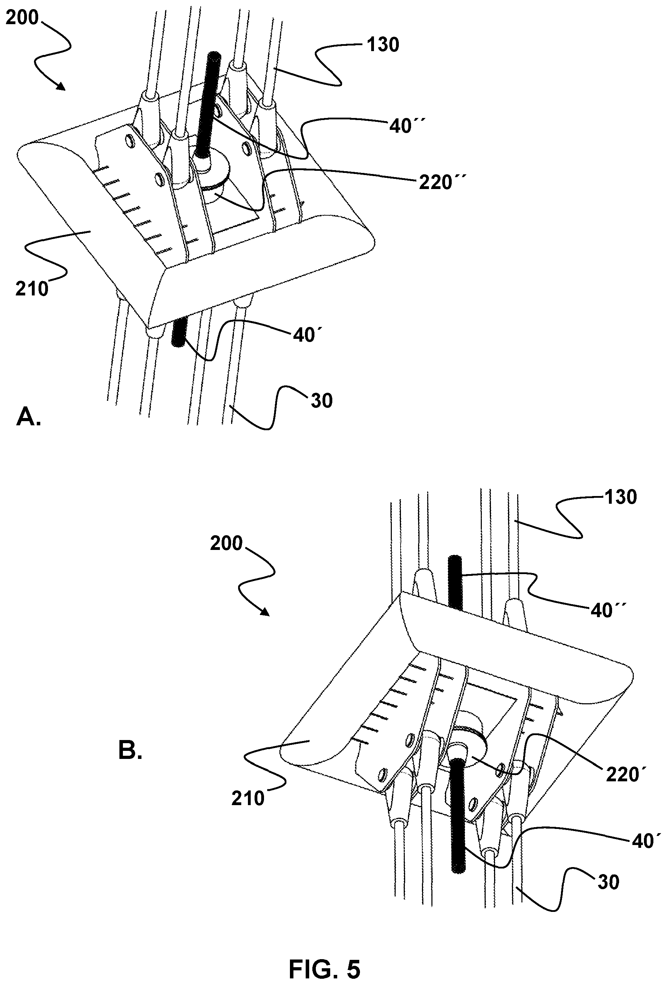

Der besonders bevorzugt vorgesehene Konnektor 200 ist näher in Fig. 5 in einer perspektivischen Ansicht von oben (A) und von unten (B) dargestellt. Der als Boje ausgestaltete Konnektor 200 besteht im Wesentlichen aus einem Schwimmkörper 210, an dem weitere Verbindungsmittel zur Befestigung der Abschnitte der Mooringleinen 30, 130 angeschlossen sind. Zentrisch ist eine wasserdichte Anschlussdose 220', 220"vorhanden, in die die Stromkabel 40', 40" von oben und unten eingeführt und elektrisch miteinander verbunden sind.

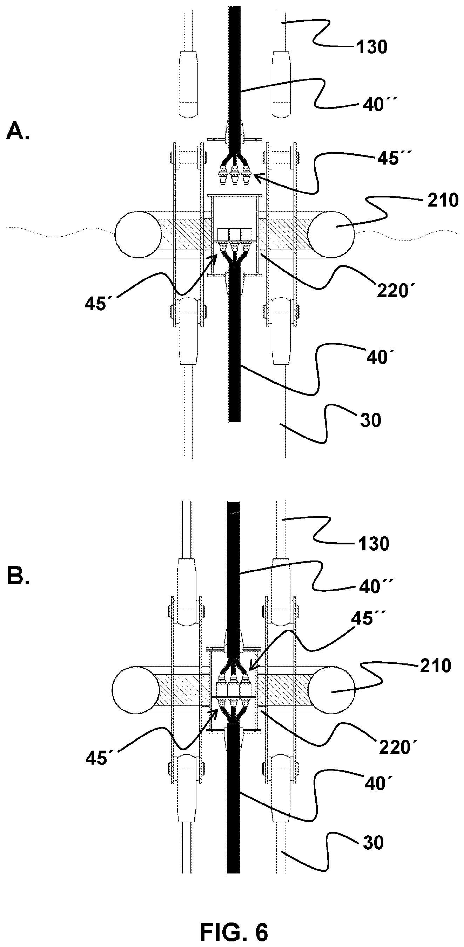

Fig. 6 zeigt eine geschnittene Ansicht des besonders bevorzugt vorgesehenen Konnektors 200 im entkuppelten Zustand (A) und im gekoppelten Zustand (B). Der Schwimmkörper 210 ist insbesondere so ausgestaltet, dass dieser das Gewicht des ersten Abschnitts der Mooringleine 30 und des unteren Stromkabels 40' tragen und die gesamte Einheit an der Wasseroberfläche halten kann. Zum Lösen der Verbindung zwischen dem Gründungselement 10 am Gewässergrund und der schwimmenden Windenergieanlage 100 wird der zweite Abschnitt der Mooringleine 130 von der Verbindungsboje 200 mechanisch gelöst und die elektrische Verbindung des Stromkabels 40" getrennt. Dazu werden die in der Anschlussdose 220" untergebrachten Stecker 45' der drei Phasen aus den Buchsen 220" gezogen.

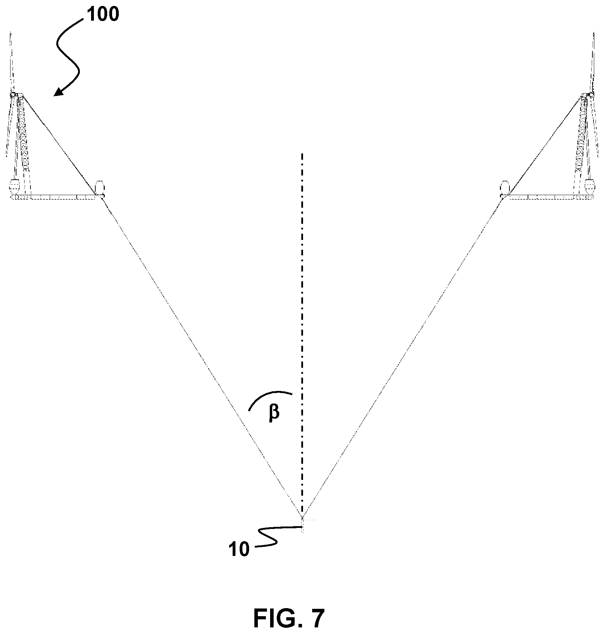

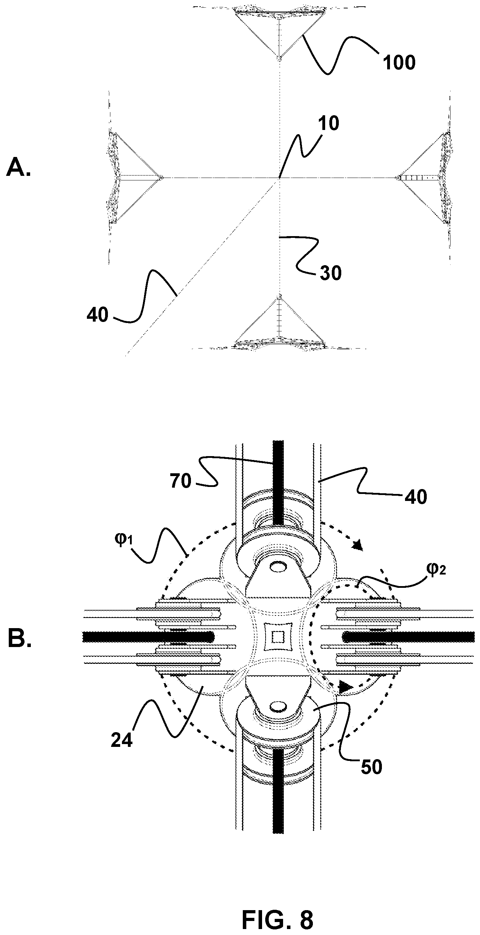

Fig. 7 und Fig. 8 dienen der Erläuterung der vom System grundsätzlich dargestellten geometrischen Verhältnisse. Dabei zeigt Fig. 7 ein besonders ausgestaltetes System nach der Erfindung in einer Seitenansicht, in der die schwimmende Windenergieanlage 100 in zwei hinsichtlich der Ausrichtung gegenüber dem Gründungselement 10 am Gewässergrund gegenüberliegenden Positionen dargestellt ist. Zu erkennen ist, dass die schwimmende Windenergieanlage 100 sich abhängig von der Windrichtung um das Gründungselement 10 herumbewegt, wobei die Mooringleine 30 und das Stromkabel sich entsprechend ausrichten und dabei durch die Wind- und Wellenlasten stramm gehalten werden. Bei diesen Bewegungen kippt die Mooringleine 30 und das Kardangelenk 20 an dem Gründungselement 10 entsprechend der Ausrichtung räumlich um die senkrechte Achse. Der Winkel zwischen der (gestrichelt dargestellten) Senkrechten und der Ausrichtung der Mooringleine 30 entspricht dem Beugewinkel $\beta$ des zweiten Achsstummels 24 des Kardangelenks 20.

Schließlich zeigt Fig. 8A ein besonders ausgestaltetes System nach der Erfindung in einer Draufsicht, wobei eine an einem Gründungselement 10 mittels einer Mooringleine 30 verbundene schwimmende Windenergieanlage 100 in vier verschiedenen, jeweils um 90° versetzten Position dargestellt ist. Die schwimmende Windenergieanlage 100 dreht sich in Abhängigkeit von Wind und Wellen um das Gründungselement 10 herum, wobei die Mooringleine 30 durch die Wind- und Wellenlast stramm gehalten wird. Zusätzlich ist das mit der Windenergieanlage 100 verbundene Seekabel 40 zu erkennen, das die mit der Windenergieanlage 100 erzeugte elektrische Energie zur Übergabestation leitet.

Diese in Fig. 8A dargestellten vier Positionen sind in Fig. 8B in einer detaillierten Draufsicht auf das Gründungselement 10 dargestellt. Anhand der Ausrichtung der Rollen 50 ist zu erkennen, dass der zweite Achsstummel 24 des Kardangelenks 20 bei Drehung um die Längsachse des ersten Achsstummels 22 zugleich eine Drehung um die eigene Achse ausführt, sodass die Rollen 50 an den Positionen des um 90° verdrehten zweiten Achsstummels zur vorherigen Position ebenfalls um 90° verdreht sind. Dabei wird die Drehposition des zweiten Achsstummels 24 um den ersten Achsstummel 22 durch den Winkel $\varphi_1$ angegeben, wobei die Drehposition des zweiten Achsstummels 24 um dessen eigene Achse durch den Winkel $\varphi_2$ gegeben ist. Mit anderen Worten wird als Abweichungswinkel $\varphi_1$ der Winkel zwischen der momentanen Drehrichtung der Mooringleine 30 in der horizontalen Ebene und der Drehrichtung der Schwenkachsen des Kardangelenkes 20 definiert, wobei der Drehwinkel des zweiten Achsstummels des Kardangelenkes der mit der Mooringleine 30 verbunden Seite mit $\varphi_2$ bezeichnet wird. Um diesen Winkel $\varphi_2$ muss der Drehantrieb 140 das zweite Verbindungsmittel 120 drehen, damit die Mooringleine 30 und das Stromkabel 40'nicht verwinden.

Grundlage ist, dass bei Abwinklung eines konventionellen Kardangelenks um den Beugewinkel $\beta$ und Verdrehen in diesem Zustand, der Drehwinkel $\varphi_2$ der Abtriebswelle vom Drehwinkel $\varphi_2$ der Antriebswelle abweicht. Es besteht die Beziehung:

$$\varphi_2 = \arctan\left(\frac{\tan \varphi_1}{\cos \beta}\right)$$

**Patentansprüche**

1. System mit

   - einem ein Kardangelenk (20, 20') aufweisenden Gründungselement (10), wobei das Kardangelenk (20, 20') einen drehfest mit dem Gründungselement (10) verbundenen ersten Achsstummel (22) und einen um die Längsachse des ersten Achsstummels (22) unter Ausführung einer Drehung um dessen eigene Längsachse drehbaren zweiten Achsstummel (24) aufweist,
   - einer schwimmenden Windenergieanlage (100), und
   - einer Mooringleine (30, 130), deren eines Ende mittels eines mit dem zweiten Achsstummel (24) drehfest verbundenen ersten Verbindungsmittels (50) mit dem Gründungselement (10) und deren anderes Ende mittels eines an der schwimmenden Windenergieanlage (100) drehbar gelagerten zweiten Verbindungsmittels (120) mit der schwimmenden Windenergieanlage (100) verbunden ist,

   **gekennzeichnet durch**

   eine in Abhängigkeit von der Drehposition der schwimmenden Windenergieanlage (100) um das Gründungselement (10) die Einnahme einer Drehposition des an der schwimmenden Windenergieanlage (100) drehbar gelagerten zweiten Verbindungsmittels (120) bewirkende Steuerung, wobei die Drehposition des an der schwimmenden Windenergieanlage (100) drehbar gelagerten zweiten Verbindungsmittels (120) der der Drehposition der schwimmenden Windenergieanlage (100) um das Gründungselement (10) geometrisch entsprechenden Drehposition des zweiten Achsstummels (24) um dessen eigene Längsachse entspricht.

2. System nach Anspruch 1, **dadurch gekennzeichnet, dass** die Steuerung unter Berücksichtigung der Ausrichtung der Längsachse der schwimmenden Windenergieanlage (100) relativ zum Gründungselement (10) die Einnahme der Drehposition des an der schwimmenden Windenergieanlage (100) drehbar gelagerten zweiten Verbindungsmittels (120) bewirkend eingerichtet ist.

3. System nach Anspruch 2, **dadurch gekennzeichnet, dass** die Steuerung einen Kompass zur Bestimmung der Ausrichtung der Längsachse der schwimmenden Windenergieanlage (100) relativ zum Gründungselement (10) aufweist.

4. System nach einem der vorhergehenden Ansprüche, **dadurch gekennzeichnet, dass** die Steuerung einen Sensor zur Positionsbestimmung mittels eines globalen Satellitennavigationssystems aufweist.

5. System nach einem der vorhergehenden Ansprüche, **dadurch gekennzeichnet, dass** die Steuerung einen Drehantrieb (140) zum Drehen des drehbar gelagerten zweiten Verbindungsmittels (120) aufweist.

6. System nach einem der vorhergehenden Ansprüche, **dadurch gekennzeichnet, dass** die schwimmende Windenergieanlage (100) eine elektrische Kupplung (160) zur Anbindung an ein mit einem außerhalb der Windenergieanlage (100) angeordneten elektrischen Netz verbundenen Stromkabel (40, 40') aufweist, die einen mit dem Stromkabel (40, 40') verbundenen ersten elektrischen Steckverbinder und einen komplementär zum ersten elektrischen Steckverbinder ausgebildeten, mit einem innerhalb der Windenergieanlage (100) angeordneten elektrischen Netz verbundenen zweiten elektrischen Steckverbinder aufweist, wobei die Steckverbinder zum Ausbilden und Trennen einer elektrischen Steckverbindung relativ zueinander verfahrbar und zum Entwinden des mit dem ersten Steckverbinder verbundenen Stromkabels (40, 40') zueinander drehbar eingerichtet sind.

7. System nach einem der vorhergehenden Ansprüche, **dadurch gekennzeichnet, dass** die Steuerung einen die schwimmende Windenergieanlage (100) auf einen vorbestimmten Abstand zum Gründungselement (10) haltenden Antrieb aufweist.

8. System nach einem der vorhergehenden Ansprüche, **dadurch gekennzeichnet, dass** das Gründungselement (10) eine Pfahlgründung, ein Suction-Bucket-Fundament oder eine Schwergewichtsgründung ist.

9. System nach einem der vorhergehenden Ansprüche, **dadurch gekennzeichnet, dass** das Kardangelenk (20) ein konventionelles Kardangelenk (20) mit sich schneidenden Gelenkdrehachsen oder ein exzentrisches Kardangelenk (20') ist.

10. System nach einem der vorhergehenden Ansprüche, **gekennzeichnet durch** einen das Kardangelenk (20, 20') einhausenden Faltenbalg.

11. System nach Anspruch 10, **dadurch gekennzeichnet, dass** der Faltenbalg eine die Achsstummel (22, 24) des Kardangelenks (20, 20') in eine gestreckte Anordnung zwingende Rückstellkraft aufweist.

12. System nach einem der vorhergehenden Ansprüche, **dadurch gekennzeichnet, dass** das Gründungselement (10) zur Anbindung an ein mit einem außerhalb der Windenergieanlage (100) angeordneten elektrischen Netz einen zur Verbindung mit einem Stromkabel (40, 40') eingerichteten Steckverbinder aufweist.

13. System nach einem der Ansprüche 1 bis 11, **dadurch gekennzeichnet, dass** das Gründungselement (10) eine ein mit einem außerhalb der Windenergieanlage (100) angeordneten elektrischen Netz verbundenes Kabel (40, 40') aufnehmende Durchführung aufweist.

14. System nach einem der vorhergehenden Ansprüche, **dadurch gekennzeichnet, dass** das Kardangelenk (20) eine ein mit einem außerhalb der Windenergieanlage (100) angeordneten elektrischen Netz verbundenes Stromkabel (40, 40') aufnehmende Durchführung aufweist.

15. System nach Anspruch 14, **dadurch gekennzeichnet, dass** die Durchführung in den das Kardangelenk (20) bildenden Achsstummeln (22, 24) und dem die Achsstummel (22, 24) miteinander verbindenden Zwischenstück (26) zentrisch angeordnet ist.

16. System nach einem der vorhergehenden Ansprüche, **dadurch gekennzeichnet, dass** das erste Verbindungsmittel (50) und/oder das zweite Verbindungsmittel (120) eine Rolle ist, um die die Mooringleine (30, 130) geführt ist.

17. System nach Anspruch 16, **gekennzeichnet durch** jeweils ein weiteres parallel zum ersten Verbindungsmittel (50) und zum zweiten Verbindungsmittel (120) angeordnetes als Rolle ausgebildetes weiteres Verbindungsmittel, um das eine weitere Mooringleine (30, 130) geführt ist.

18. System nach einem der vorhergehenden Ansprüche, **dadurch gekennzeichnet, dass** die Mooringleine (30, 130) zweiteilig ausgebildet ist, wobei die zwei Abschnitte (30, 130) der Mooringleine (30, 130) mittels eines Konnektors (200) miteinander verbunden sind.

19. System nach Anspruch 18, **dadurch gekennzeichnet, dass** der Konnektor (200) als schwimmfähige Boje ausgebildet ist.

20. System nach einem der Ansprüche 18 und 19, **dadurch gekennzeichnet, dass** der Konnektor (200) auf einer seiner Oberflächen einen ersten Anschluss (220') für ein den Konnektor (200) mit einem außerhalb der Windenergieanlage (100) angeordneten elektrischen Netz verbindendes erstes Stromkabel (40') und auf einer dieser Oberfläche gegenüberliegenden Oberfläche einen zweiten Anschluss (220") für ein den Konnektor (200) mit der schwimmenden Windenergieanlage (100) verbindendes zweites Stromkabel (40") aufweist.

21. System nach einem der Ansprüche 18 bis 20, **dadurch gekennzeichnet, dass** die Länge des das Gründungselement (10) mit dem Konnektor (200) verbindenden Abschnitts (30) wenigstens der Gewässertiefe im Bereich des Gründungselements (10) entspricht.

22. System nach einem der vorhergehenden Ansprüche, **dadurch gekennzeichnet, dass** die Mooringleine (30, 130) ein Seil ist.

## Claims

1. System with

   - a foundation element (10) having a universal joint (20, 20'), the universal joint (20, 20') having a first stub axle (22) connected in a rotationally fixed manner to the foundation element (10) and a second stub axle (24) rotatable about the longitudinal axis of the first stub axle (22) while performing a rotation about its own longitudinal axis,
- a floating wind turbine (100), and
- a mooring line (30, 130), one end of which is connected to the foundation element (10) by means of a first connecting means (50) connected to the second stub axle (24) in a rotationally fixed manner and the other end of which is connected to the floating wind turbine (100) by means of a second connecting means (120) mounted rotatably on the floating wind turbine (100),

**characterized by**
a control system which, as a function of the rotational position of the floating wind turbine (100) about the foundation element (10), causes the second connecting means (120), which is rotatably mounted on the floating wind turbine (100), to assume a rotational position, wherein the rotational position of the second connecting means rotatably mounted on the floating wind turbine (100) corresponds to the rotational position of the second stub axle (24) about its own longitudinal axis, which geometrically corresponds to the rotational position of the floating wind turbine (100) about the foundation (10).

2. System according to claim 1, **characterized in that** the control system is set up to take into account the orientation of the longitudinal axis of the floating wind turbine (100) relative to the foundation element (10) and to cause the second connecting means (120), which is rotatably mounted on the floating wind turbine (100), to assume the rotational position.

3. System according to claim 2, **characterized in that** the control system has a compass for determining the orientation of the longitudinal axis of the floating wind turbine (100) relative to the foundation element (10).

4. System according to one of the preceding claims, **characterized in that** the control system has a sensor for determining the position by means of a global satellite navigation system.

5. System according to one of the preceding claims, **characterized in that** the control system has a rotary drive (140) for rotating the rotatably mounted second connecting means (120).

6. 6. system according to one of the preceding claims, **characterized in that** the floating wind energy system (100) has an electrical coupling (160) for connection to a power cable (40, 40') connected to an electrical network arranged outside the wind energy system (100), which coupling has a first electrical plug connector connected to the power cable (40, 40') and a second electrical plug connector designed complementary to the first electrical plug connector and connected to an electrical network arranged inside the wind energy system (100), wherein the plug connectors are movable relative to one another to form and disconnect an electrical plug connection and are arranged so as to be rotatable relative to one another to untwist the power cable (40, 40') connected to the first plug connector.

7. System according to one of the preceding claims, **characterized in that** the control system comprises a drive holding the floating wind turbine (100) at a predetermined distance from the foundation element (10).

8. System according to one of the preceding claims, **characterized in that** the foundation element (10) is a pile foundation, a suction bucket foundation or a gravity foundation.

9. System according to one of the preceding claims, **characterized in that** the universal joint (20) is a conventional universal joint (20) with intersecting joint axes of rotation or an eccentric universal joint (20').

10. System according to one of the preceding claims, **characterized by** a bellows enclosing the universal joint (20, 20').

11. System according to claim 10, **characterized in that** the bellows has a restoring force forcing the stub axles (22, 24) of the universal joint (20, 20') into a stretched arrangement.

12. System according to one of the preceding claims, **characterized in that** the foundation element (10) for connection to an electrical network arranged outside the wind turbine (100) has a plug connector set up for connection to a power cable (40, 40').

13. System according to one of claims 1 to 11, **characterized in that** the foundation element (10) has a feed-through receiving a cable (40, 40') connected to an electrical grid arranged outside the wind turbine (100).

14. System according to one of the preceding claims, **characterized in that** the universal joint (20) has a feed-through receiving a power cable (40, 40') connected to an electrical grid arranged outside the wind turbine (100).

15. System according to claim 14, **characterized in that** the feed-through is arranged centrally in the stub axles (22, 24) forming the universal joint (20) and in the intermediate piece (26) connecting the stub axles (22, 24) to one another.

16. System according to one of the preceding claims, **characterized in that** the first connecting means (50) and/or the second connecting means (120) is a roller around which the mooring line (30, 130) is guided.

17. System according to claim 16, **characterized by** a further connecting means arranged parallel to the first connecting means (50) and to the second connecting means (120) and designed as a roller, around which a further mooring line (30, 130) is guided.

18. System according to one of the preceding claims, **characterized in that** the mooring line (30, 130) is formed in two parts, the two sections (30, 130) of the mooring line (30, 130) being connected to one another by means of a connector (200).

19. System according to claim 18, **characterized in that** the connector (200) is designed as a floatable buoy.

20. System according to one of claims 18 and 19, **characterized in that** the connector (200) has, on one of its surfaces, a first connection (220') for a first power cable (40') connecting the connector (200) to an electrical network arranged outside the wind turbine (100) and, on a surface opposite this surface, a second connection (220") for a second power cable (40") connecting the connector (200) to the floating wind turbine (100)

21. System according to one of claims 18 to 20, **characterized in that** the length of the section (30) connecting the foundation element (10) to the connector (200) corresponds at least to the depth of the water in the region of the foundation element (10).

22. System according to one of the preceding claims, **characterized in that** the mooring line (30, 130) is a rope.

**Revendications**

1. Système comportant

   - un élément de fondation (10) présentant un joint de cardan (20, 20'), dans lequel le joint de cardan (20, 20') présente un premier bout d'axe (22) relié de manière solidaire en rotation à l'élément de fondation (10) et un second bout d'axe (24) pouvant tourner autour de l'axe longitudinal du premier bout d'axe (22) en réalisant une rotation autour de son propre axe longitudinal,
   - une éolienne flottante (100), et
   - une ligne d'amarrage (30, 130) dont une extrémité est reliée à l'élément de fondation (10) au moyen d'un premier moyen de liaison (50) relié de manière solidaire en rotation au second bout d'axe (24) et dont l'autre extrémité est reliée à l'éolienne flottante (100) au moyen d'un second moyen de liaison (120) monté de manière à pouvoir tourner sur l'éolienne flottante (100),

   **caractérisé par**
   une commande provoquant, en fonction de la position de rotation de l'éolienne flottante (100) autour de l'élément de fondation (10), la prise d'une position de rotation du second moyen de liaison (120) monté de manière à pouvoir tourner sur l'éolienne flottante (100), dans lequel la position de rotation du second moyen de liaison (120) monté de manière à pouvoir tourner sur l'éolienne flottante (100) correspond à la position de rotation du second bout d'axe (24) autour de son propre axe longitudinal, laquelle position de rotation correspond géométriquement à la position de rotation de l'éolienne flottante (100) autour de l'élément de fondation (10).

2. Système selon la revendication 1, **caractérisé en ce que** la commande est conçue de manière à provoquer, en tenant compte de l'orientation de l'axe longitudinal de l'éolienne flottante (100) par rapport à l'élément de fondation (10), la prise de la position de rotation du second moyen de liaison (120) monté de manière à pouvoir tourner sur l'éolienne flottante (100).

3. Système selon la revendication 2, **caractérisé en ce que** la commande présente une boussole pour la détermination de l'orientation de l'axe longitudinal de l'éolienne flottante (100) par rapport à l'élément de fondation (10).

4. Système selon l'une des revendications précédentes, **caractérisé en ce que** la commande présente un capteur pour la détermination de la position au moyen d'un système mondial de navigation par satellites.

5. Système selon l'une des revendications précédentes, **caractérisé en ce que** la commande présente un entraînement rotatif (140) permettant de faire tourner le second moyen de liaison (120) monté de manière à pouvoir tourner.

6. Système selon l'une des revendications précédentes, **caractérisé en ce que** l'éolienne flottante (100) présente un coupleur électrique (160) pour le raccordement à un câble électrique (40, 40') connecté à un réseau électrique disposé à l'extérieur de l'éolienne (100), lequel coupleur électrique présente un premier connecteur enfichable électrique relié au câble électrique (40, 40') et un second connecteur enfichable électrique réalisé de manière à être complémentaire du premier connecteur enfichable électrique et connecté à un réseau électrique disposé à l'intérieur de l'éolienne (100), dans lequel les connecteurs enfichables sont conçus de manière à pouvoir être déplacés l'un par rapport à l'autre pour la formation et la séparation d'une connexion électrique par enfichage et de manière à pouvoir tourner l'un par rapport à l'autre pour le débranchement du câble électrique (40, 40') relié au premier connecteur enfichable.

7. Système selon l'une des revendications précédentes, **caractérisé en ce que** la commande présente un entraînement maintenant l'éolienne flottante (100) à une distance prédéterminée de l'élément de fondation (10).

8. Système selon l'une des revendications précédentes, **caractérisé en ce que** l'élément de fondation (10) est une fondation sur pieux, une fondation à godet-pompe ou une fondation lourde.

9. Système selon l'une des revendications précédentes, **caractérisé en ce que** le joint de cardan (20) est un joint de cardan conventionnel (20) comportant des axes de rotation de joint qui se coupent ou un joint de cardan excentrique (20').

10. Système selon l'une des revendications précédentes, **caractérisé par** un soufflet enveloppant le joint de cardan (20, 20').

11. Système selon la revendication 10, **caractérisé en ce que** le soufflet présente une force de rappel qui contraint les bouts d'axe (22, 24) du joint de cardan (20, 20') dans une disposition étirée.

12. Système selon l'une des revendications précédentes, **caractérisé en ce que** l'élément de fondation (10) présente, pour le raccordement à un réseau électrique disposé à l'extérieur de l'éolienne (100), un connecteur enfichable conçu pour être relié à un câble électrique (40, 40').

13. Système selon l'une des revendications 1 à 11, **caractérisé en ce que** l'élément de fondation (10) présente un passage recevant un câble (40, 40') connecté à un réseau électrique disposé à l'extérieur de l'éolienne (100).

14. Système selon l'une des revendications précédentes, **caractérisé en ce que** le joint de cardan (20) présente un passage recevant un câble électrique (40, 40') connecté à un réseau électrique disposé à l'extérieur de l'éolienne (100).

15. Système selon la revendication 14, **caractérisé en ce que** le passage est disposé de manière à être centré dans les bouts d'axe (22, 24) formant le joint de cardan (20) et la pièce intermédiaire (26) reliant les bouts d'axe (22, 24) entre eux.

16. Système selon l'une des revendications précédentes, **caractérisé en ce que** le premier moyen de liaison (50) et/ou le second moyen de liaison (120) sont des rouleaux autour desquels la ligne d'amarrage (30, 130) est guidée.

17. Système selon la revendication 16, **caractérisé par** respectivement un autre moyen de liaison disposé parallèlement au premier moyen de liaison (50) et au second moyen de liaison (120), réalisé sous forme de rouleau et autour duquel est guidée une autre ligne d'amarrage (30, 130).

18. Système selon l'une des revendications précédentes, **caractérisé en ce que** la ligne d'amarrage (30, 130) est réalisée en deux parties, dans lequel les deux sections (30, 130) de la ligne d'amarrage (30, 130) sont reliées entre elles au moyen d'un élément de liaison (200).

19. Système selon la revendication 18, **caractérisé en ce que** l'élément de liaison (200) est réalisé sous forme de bouée flottante.

20. Système selon l'une des revendications 18 et 19, **caractérisé en ce que** l'élément de liaison (200) présente sur l'une de ses surfaces un premier raccordement (220') pour un premier câble électrique (40') reliant l'élément de liaison (200) à un réseau électrique disposé à l'extérieur de l'éolienne (100) et présente sur une surface opposée à ladite surface un second raccordement (220") pour un second câble électrique (40") reliant l'élément de liaison (200) à l'éolienne flottante (100).

21. Système selon l'une des revendications 18 à 20, **caractérisé en ce que** la longueur de la section (30) reliant l'élément de fondation (10) à l'élément de liaison (200) correspond au moins à la profondeur de l'eau dans la zone de l'élément de fondation (10).

22. Système selon l'une des revendications précédentes, **caractérisé en ce que** la ligne d'amarrage (30, 130) est un câble.

**FIG. 1**

FIG. 2

**FIG. 3**

A.

100

30

10

B.

130

200

40´

30

120    110

100

FIG. 4

**FIG. 5**

**A.**

**B.**

FIG. 6

**FIG. 7**

**A.**

**B.**

**FIG. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004056401 A
- DE 102013111115 B3
- US 2014193259 A1
- JP 6038825 B
- DE 102017119635 B3